# EUROPEAN PATENT SPECIFICATION

(11) **EP 0 475 659 B1**
(45) Date of publication and mention of the grant of the patent: **15.01.1997**
(21) Application number: 91308052.9
(22) Date of filing: 03.09.1991
(51) Int. Cl.: G06K 9/74

(54) **Optical pattern recognition apparatus**
Optisches Mustererkennungsgerät
Appareil de reconnaissance de formes optique

(30) Priority: 05.09.1990 JP 236212/90
(43) Date of publication of application: 18.03.1992
(73) Proprietor: SEIKO INSTRUMENTS INC., Tokyo 136 (JP)
(72) Inventor: Mitsuoka, Yasuyuki, Koto-ku, Tokyo (JP); Iwaki, Tadao, Koto-ku, Tokyo (JP); Yoshikawa, Tomohiro, Koto-ku, Tokyo (JP)
(74) Representative: Sturt, Clifford Mark

(56) References cited:
- EP-A- 0 403 305
- PROCEEDINGS OF THE SPIE CONFERENCE: COMPUTER AND OPTICALLY FORMED HOLOGRAPHIC OPTICS vol. 1211, 15 January 1990, LOS ANGELES, US pages 284-295; T. IWAKI ET AL.: 'Optical pattern recognition with LAPS-SLM (II) / feedback joint transform correlator using LAPS-SLM'

## Description

The present invention relates to apparatus for use in the field of optical computing and optical measurement for performing optical correlation processing for pattern recognition and measurement using a coherent beam applied to a two-dimensional image obtained from an imaging device, such as a CCD camera.

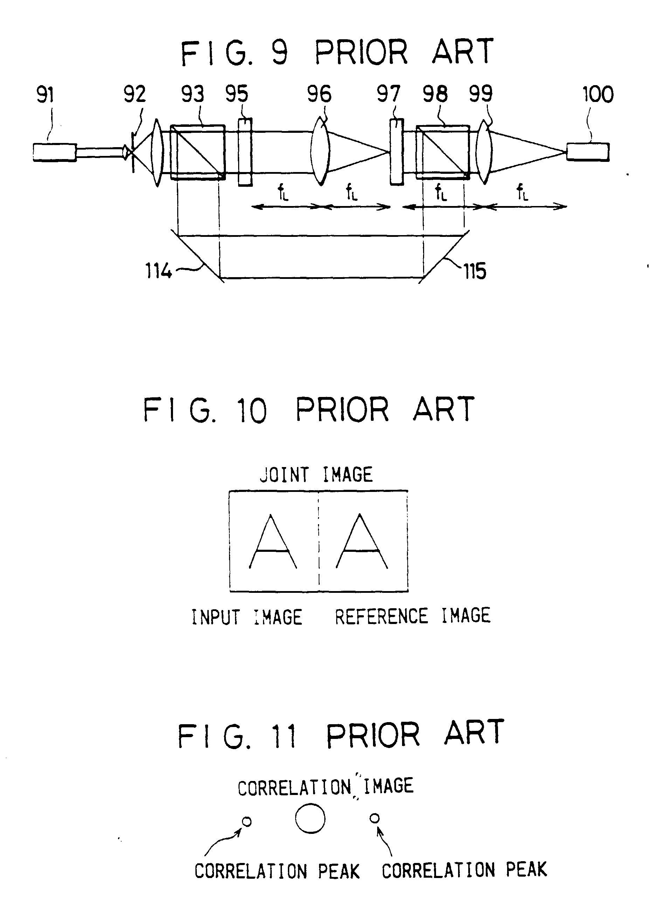

Conventionally, optical pattern recognition apparatus and correlation processing apparatus generally employ a joint transform correlator, as shown, for example, in figure 9. A spatial light modulator of a light addressed type may be utilised in such apparatus, as disclosed in Japanese Laid Open Patent Applications Nos. 138616/1982, 210316/1982 and 21716/1983.

In the apparatus shown in figure 9, a plate 95 carries a joint input image composed of a reference image, for use as a recognition basis, and a signal input image, as an object of recognition. An example of such a joint input image, with reference and signal input images adjacent to one another, is shown in figure 10. A laser 91 emits a laser beam, which is expanded by a beam expander 92. Thereafter, the expanded laser beam irradiates the joint input image on the plate 95 to convert the joint input image into a coherent image. This coherent image undergoes Fourier transformation by means of a Fourier transform lens 96. The light intensity distribution of the Fourier transform image is recorded on a spatial light modulator, in the form of a liquid crystal light valve 97, which is disposed in a Fourier plane of the lens 96.

The incident light beam, which was divided by a beam splitter 93, is also directed by way of mirrors 114, 115 and a polarising beam splitter 98 onto the liquid crystal light valve 97 to read out the recorded light intensity distribution of the Fourier transform image. The thus reproduced Fourier transform image is passed through the polarising beam splitter 98 and again undergoes Fourier transformation by another Fourier transform lens 99 to produce, in the Fourier transfer plane of the lens 99, a correlation image containing correlation peaks indicative of a correlation coefficient between the input image and the reference image. Such peaks are detected by a CCD camera 100.

Figure 11 shows an example of a pair of correlation peaks detected by the CCD camera 100 and indicative of a correlation coefficient between the reference image and the signal input image.

However, the conventional apparatus normally processes an image pair consisting only of a single signal input image and a single reference image. Therefore, in the case of a letter of an alphabet, a particular character to be recognised is represented as the signal input image. Then, in order to examine the correlation in relation to all of the characters of the alphabet, the reference image is altered, by replacing each character one by one, so as to effect sequential correlation processing, thereby consuming a considerable amount of time.

In order to solve such a problem, concurrent correlation processing could be undertaken between a signal input image and multiple reference images. However, in such a case, the intensity of each correlation peak is seriously weakened due to interference during the concurrent correlation processing between the multiple reference images and the single signal input image. The noise also increases to undermine the weakened correlation peaks and to hinder separation thereof, which may thereby cause incorrect recognition.

Recently, it has been suggested, for example, in Applied Optics, 27,663 (1988), B. Javidi and C. J. Kuo, that the intensity distribution of the joint Fourier transform image of the reference and signal input images are binarised to form clear and sharp correlation peaks, whereby to improve the S/N ratios. However, this prior arrangement is still not effective to carry out the concurrent correlation processing without any incorrect recognition.

In Proceedings of the SPIE Conference: COMPUTER AND OPTICALLY FORMED HOLOGRAPHIC OPTICS, Vol 1211, 15 January 1990, Los Angeles, US, pages 284 - 295; T. Iwaki et al.: "Optical Pattern Recognition with LAPS-SLM (II)/ Feedback Joint Transform Correlator using LAPS-SLM" and EP-A-0 403 305 optical pattern recognition systems are disclosed in which the intensity of light applied to form joint images varies in different iterations of the pattern recognition process. EP-A-0 403 305 is relevant by virtue of Article 54(3) EPC.

An object of the present invention is to provide a joint correlator effective to carry out concurrent correlation processing at a fast speed and without incorrect recognition.

According to the present invention, there is provided optical pattern recognition apparatus comprising means for generating a coherent image of a joint input image, including at least one reference image and a plurality of signal images or a plurality of reference images and at least one signal image, by applying a coherent light beam to the joint input image, Fourier transform means for transforming the coherent image into a joint Fourier transform image, means for converting the joint Fourier transform image into a light intensity distribution, and means for determining a correlation coefficient between the reference and the signal images based on the light intensity distribution, means responsive to an output from the correlation coefficient determining means for controlling in accordance with a transfer function the intensity of light applied to each of said plurality of signal images (S) or said plurality of reference images (Rᵢ) to form a subsequent joint image, characterised by means for determining or correcting the transfer function, which are arranged to alter the transfer function according to the number of reference images and/or the degree to which the images are alike.

Preferably, the controlling means include means located before or after the joint input image having a variable transmittance or reflectance at respective regions corresponding to each of said plurality of images such that the transmittance or reflectance varies in a linear or non-linear relationship according to the correlation coefficient.

Preferably, the converting means comprise means for converting the joint Fourier transform image into an intensity distribution image to be displayed on a spatial light modulator. In this instance, the means for determining the correlation coefficient may comprise means for reading the intensity distribution image displayed on the spatial light modulator using a coherent beam, means for performing Fourier transformation on the read image and converting the result into a correlation signal using an imaging device or light detector, and means for processing the correlation signal to determine a two-dimensional correlation coefficient.

As described below, a feed-back transfer function is employed to feed the correlation coefficients back to control the intensity of coherent light applied to each of a plurality of reference images. Such an arrangement allows not only the expression of the feed-back transfer function but also a threshold value and dynamic range thereof to be arbitarily set according to various conditions, such as the number of signal and reference images, the degree to which the images are alike, and speed and precision required for pattern recognition. It is also possible to change the setting according to the distribution of the correlation coefficients.

Therefore, by setting an appropriate function according to a particular situation, quick and precise pattern recognition and measurement can be performed, which is a significant advantage in relation to the prior art.

The invention is described further, by way of example, with reference to the accompanying drawings, in which:
Figure 1 is a schematic diagram illustrating the principle of this invention;
Figure 2 is a diagram of one embodiment of this invention;
Figure 3 is a diagram showing one example of a joint input image used in the embodiment of figure 2;
Figure 4 is a graph showing an example of a Sigmoid function for various threshold values;
Figure 5 is a graph showing a recognition characteristic for various threshold values;
Figure 6 is a graph showing an example of a Sigmoid function for different dynamic ranges;
Figure 7 is a graph showing a recognition characteristic for different dynamic ranges;
Figure 8 is a graph showing changes, due to reiteration, in the light intensity of normalised peak level obtained in the embodiment of figure 2;
Figure 9 is a schematic diagram showing a conventional joint transform correlator of the optical writing type;
Figure 10 is an illustration showing an example of a joint image to be processed in the conventional joint transform correlator; and
Figure 11 is an illustration showing an example of a correlation peak image obtained in the conventional joint transform correlator.

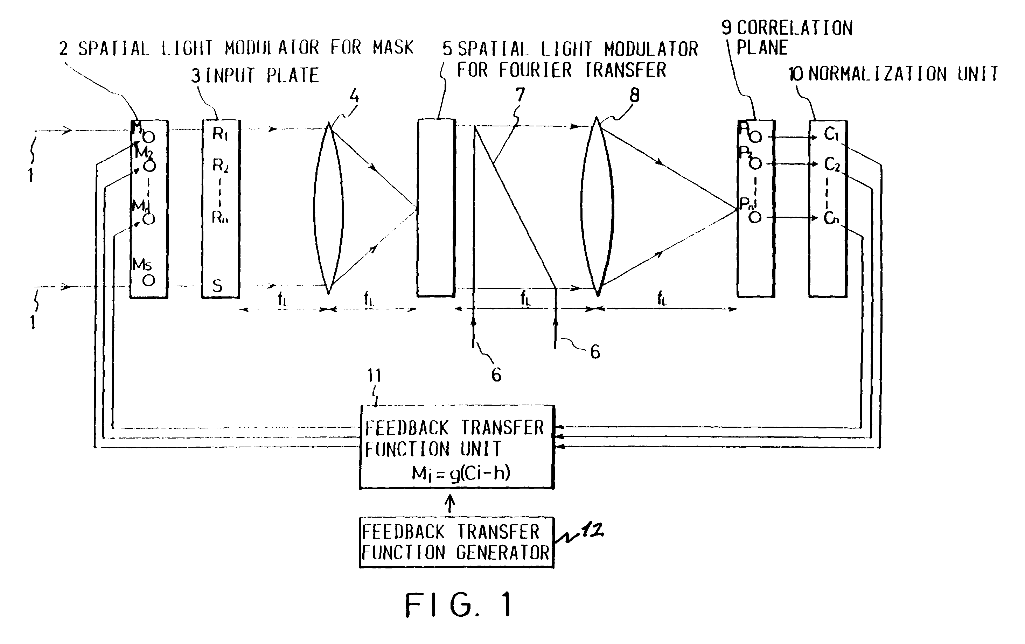

Referring initially to figure 1 of the accompanying drawings, a spatial light modulator 5 shown therein for effecting Fourier transformations is of a light writing and reflection type. At least one reference image, including a specified object, and at least one signal image to be input are provided as a joint input image on an input plate 3 and are transformed into a coherent image by means of a write beam 1. More especially, the input plate 3 has n reference images R₁ to Rₙ and one signal image S arranged in parallel thereon. A lens 4 serves to Fourier transform the coherent image to obtain a joint Fourier transform image of the reference images and the signal image. A spatial light modulator 5 converts the joint Fourier transform image to provide an intensity distribution image for display on the spatial light modulator 5.

A read beam 6 obtained from the coherent beam 1 is directed by a beam splitter 7 to read the intensity distribution image displayed on the spatial light modulator 5, and a Fourier transform lens 8 performs a Fourier transformation again on the intensity distribution image thus read, to convert the image into correlation signals at a correlation plane element 9 using an imaging device or light detector. There are n pairs of correlation peaks P₁ to Pₙ generated at the correlation plane element 9. A normalisation unit 10 processes the correlation signals to determine corresponding two-dimensional correlation coefficients C₁ to Cₙ between the reference images and the signal image.

Located before or after the reference images Rᵢ, a feed-back transfer function unit 11 and a spatial light modulator 2 serving as a mask combine to change the transmittances or reflectances Mᵢ, at selected portions of the mask corresponding to the reference images Rᵢ, linearly or non-linearly with respect to the correlation coefficients Cᵢ. The linear or non-linear relationship is determined or changed by a feed-back transfer function generator 12. Hence, the invention includes a feed-back loop in the joint transform correlator.

At a first step in a processing operation, a measurement is taken of the light intensities of the correlation peaks Pᵢ, which represent n two-dimensional correlation coefficients between the n reference images and the signal image. As a second step, the light intensities of the correlation peaks Pᵢ thus obtained are normalised by the maximum light intensity of all the correlation peaks, and their values are taken as Cᵢ. As a third step, the spatial light modulator 2 serving as a mask is driven in such a way as to make the intensities of light passing through the reference images Rᵢ change virtually linearly or non-linearly with respect to the corresponding normalised correlation values Cᵢ. That is, the transmittances Mᵢ of the masking spatial light modulator 2, corresponding to the reference images, are related to the correlation values Cᵢ by the following linear or non-linear functions g:${\text{M}}_{\text{i}} {\text{= g(C}}_{\text{i}} \text{) (i = 1, 2, ..., n)}$ These functions g are referred to hereinafter as feed-back functions.

In the above method, the correlation values or coefficients Cᵢ between the reference images Rᵢ and the signal image S are fed back for use in adjusting the intensity of the light passing through the corresponding reference images. In this condition, the correlation processing is performed again. The feed-back process is then repeated to recognise a pattern.

Depending on the number and kind of the reference images, only the form of the feed-back transfer function need be modified to change the precision of recognition and the number of feed-back operations required for convergence (the convergence speed).

For example, let us consider a case where the variation in the normalised correlation value Cᵢ is large, as in the case where the number of reference images Rᵢ is small. In this case, if the feed-back function g is linear, a change in the correlation coefficient that occurs as a result of one feed-back operation is small, making the number of feed-back operations required for convergence significantly large. Therefore, as a feed-back function, a Sigmoid function shown below is used:${\text{g(x) = [1 + tanh{(x - α)/x}}_{\text{0}} \text{}]/2}$ In the above equation, increasing the non-linearity by reducing the value x₀ enables precise recognition and also reduces the number of feed-back cycles necessary for convergence. The Sigmoid function expressed in equation (2) approaches a unit step function increasing the non-linearity as the value of x₀ is reduced. When the non-linearity is large, α can be considered as a threshold value.

Conversely, let us consider a case where the variation in the correlation coefficients Cᵢ is small, as in the case where the number of reference images Rᵢ is large. In this case, an erroneous recognition of the non-linearity being large or a failure of the function to converge may occur, so that the time to convergence is increased. However, by reducing the non-linearity of the feed-back transfer function g, by increasing the value of x₀ of the Sigmoid function of equation (2), it is possible to achieve precise recognition.

The linear or non-linear feed-back function g remains constant and is not changed during the recognition process using the feed-back operation.

By the addition of the feed-back transfer function generator 12, arbitary setting or changing of the feed-back transfer function is made possible.

As mentioned above, in the pattern recognition apparatus according to the invention, the input image plate 3 has n reference images R₁ to Rₙ and one signal image S arranged in parallel thereon. In the spatial light modulator 2 serving for a mask, the transmittances at positions corresponding to the reference images R to Rₙ are taken as M₁ to Mₙ and the transmittance at a position corresponding to the signal images is taken as Mₛ.

The correlation processing in this invention thus produces n pairs of correlation peaks on the correlation plane element 9. For simplicity, let us consider the correlation peaks P₁ to Pₙ on one side only. By entering the correlation peaks in the normalisation unit 10, two-dimensional correlation coefficients C₁ to Cₙ between the reference images and the signal image can be determined.

More specifically, the feed-back transfer function may be expressed at follows:${\text{M}}_{\text{i}} {\text{= g (C}}_{\text{i}} \text{- h) (i = 1, 2, ..., n)}$ where h represents a threshold value, g represents the feed-back transfer function, and Mᵢ represents transmittances at portions of the masking spatial light modulator 2 corresponding to the reference images Rᵢ. The feed-back transfer function is set by the feed-back transfer function generator 12. The provision of the feed-back transfer function generator 12 makes it possible to not only to use a pre-set feed-back transfer function but also to change the expression and threshold value of the feed-back transfer function according to the initial state and the light intensity distribution of the correlation peaks produced during the recognition process using the feed-back operation.

In this way, the light intensities of the correlation peaks Pᵢ are fed back to modify the intensity of light radiated onto the corresponding reference images Rᵢ, and the correlation processing performed again. The process is repeated until a precise recognition is obtained.

Amongst the possible forms of the feed-back transfer function are: a Sigmoid function, a trigonometric function, and a logarithmic function as saturated functions. A step function with at least one stage, i.e. a unit step function and a multiple step function, may also be used. Further, it is possible to use a combination of such functions.

Now, let us consider changes in a recognition characteristic that occur when the feed-back transfer function is changed.

As mentioned above, it is possible to change the convergence speed and recognition precision simply by changing the form of the feed-back transfer function. For example, where a Sigmoid function, such as the one shown in equation (2), is used as a feed-back transfer function, in which the non-linearity can be changed, it is seen that in one case the greater the non-linearity, the faster the function converges.

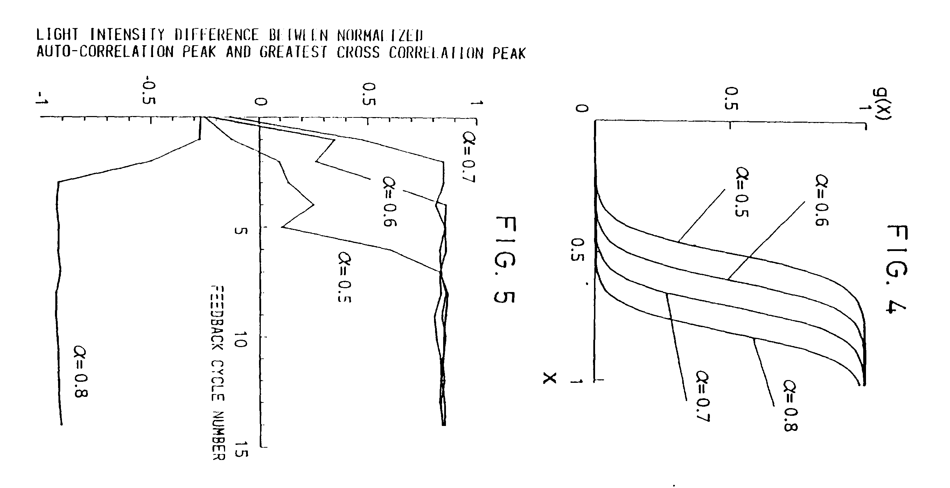

When the above Sigmoid function with a large non-linearity is used as the feed-back transfer function, it is found that, as the threshold value α is changed, the precision of recognition also varies greatly. Examples of the Sigmoid function with the threshold value α changed are shown in figure 4. In this figure, x₀ = 0.1. Figure 5 shows the recognition characteristics when the Sigmoid function of figure 4 is used as the feed-back transfer function.

In figure 5, the abscissa represents the feed-back cycle number and the ordinate represents the light intensity difference between the normalised auto-correlation peak and the greatest cross-correlation peak. If the difference value is positive, this means that the pattern can be recognised correctly. If it is negative, this indicates that the recognition is false. From this diagram, it can be seen that, when a feed-back transfer function with a large non-linearity is used, the time required for convergence is short if the threshold value is properly set. However, if the threshold value is not appropriate, an erroneous recognition or failure to convergence may occur, as in the case of α = 0.8.

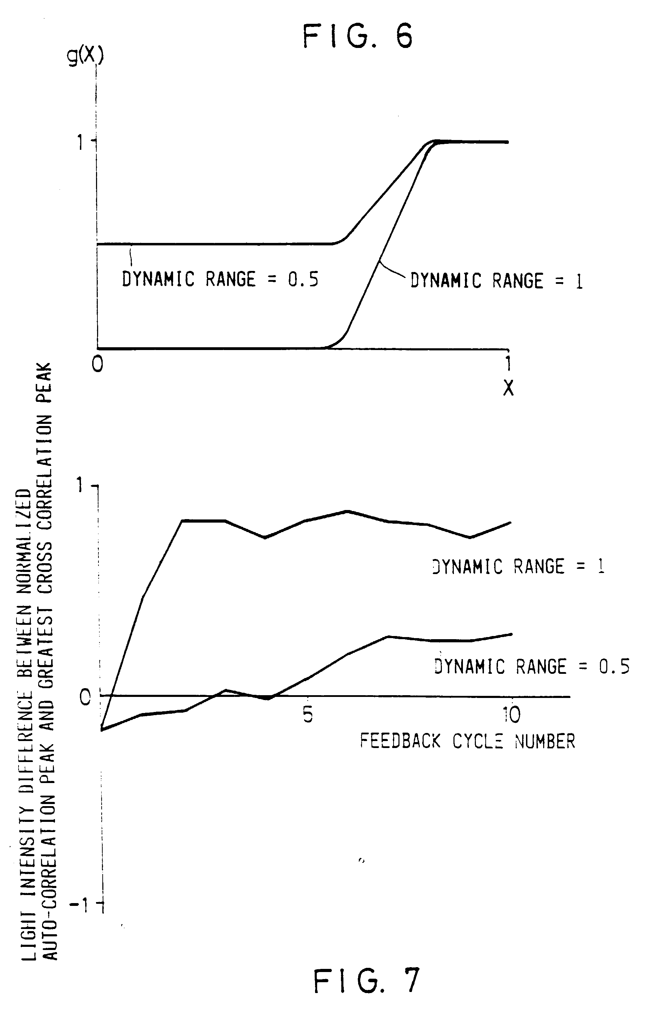

Further, where the above Sigmoid function with a large non-linearity is used as a feed-back transfer function, it is also possible to change the convergence speed by changing the dynamic range of the function. Changing the dynamic range is equivalent to changing the contrast of the masking spatial light modulator 2. Examples of the function with different dynamic ranges are shown in figure 6. Figure 7 shows the recognition characteristics in this case. Figure 7 indicates that, as the dynamic range lowers, the convergence slows down and the light intensity difference between the normalised auto-correlation peak and the greatest cross-correlation peak becomes small.

As explained above, proper setting of the feed-back transfer function can reduce the recognition time and increase the precision of the result.

Also, as mentioned, the appropriate feed-back transfer function varies depending on the state of the joint input image and the requirements for recognition. By way of example, the states of the joint input image that affect the correlation peak intensity distribution for the reference images include: the number of reference images contained in the joint input image, and the orthogonality among the reference images themselves (namely, the degree to which the reference images are alike). Generally, as the number of the reference images increases, the correlation peak intensities decrease and optical knowledge components, such as speckles, increase. This in turn reduces variation in the correlation peak intensities and also reduces the S/N ratio of the correlation peak intensities, making precise recognition difficult. Also, when the orthogonality between the reference images is low, the variation in the correlation peak intensities become small, making correct recognition difficult. For this reason, it is important to set the feed-back transfer function appropriately, by means of the feed-back transfer function generator 12 according to the state of the joint input image and the correlation peak intensity distribution.

While, in the above example, the spatial light modulator 5 for Fourier transformation is shown to be of a light writing and reflection type, it may be of a transmission type or an electrical writing type, both of which are in principle identical with the former.

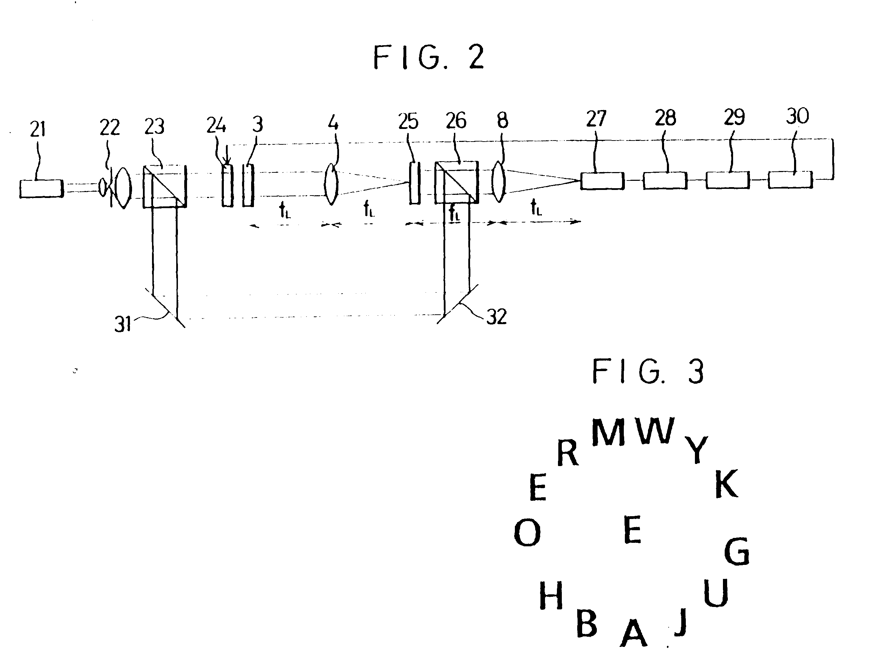

Figure 2 shows a specific embodiment of this invention. Like the general system shown in figure 1, the apparatus of figure 2 employs a spatial light modulator (5) of the light writing and reflection type in the form of a liquid crystal light valve 25. A laser 21 and a beam expander 22 provide a light beam for converting a joint input image on an input plate 3, comprising at least one reference image including a specified object and at least one signal image to be input, into a coherent image. The coherent image undergoes Fourier transformation by a lens 4 to produce a joint Fourier transform image of the reference image and the signal image. The liquid crystal light valve 25 converts the joint Fourier transform image into an intensity distribution image and also displays the intensity distribution image.

The displayed intensity distribution image is read out using the coherent beam supplied by way of a beam splitter 23, mirrors 31, 32 and a deflection beam splitter 26. A lens 8 and a CCD camera 27 perform a Fourier transformation again on the intensity distribution image thus read out and then convert the image into correlation signals through an imaging device or a light detector. An A/D convertor 28 and a computer 29 process the correlation signals to determine two-dimensional correlation coefficients between the reference images and the signal image. Located before or after the reference images, a feed-back arrangement, comprising the computer 29, a D/A convertor 30 and a masking liquid crystal television 24 together, changes the transmittances or reflectances at portions of the masking liquid crystal television 24 corresponding to the reference images, in a linear or non-linear relationship with the correlation coefficients. The linear or non-linear relationship is determined or changed by the computer 29.

A coherent beam emitted by the laser 21 and expanded by the beam expander 22 is divided into two beams by the beam splitter 23. The beam that has passed through the beam splitter 23 now passes through the masking liquid crystal television 24 and strikes the joint input image of the input plate 3, on which the signal image and the reference images are arranged in parallel, so as to convert the joint input image into a coherent image. The coherent image is then Fourier transformed by the Fourier transform lens 4 and radiated onto writing surface of the liquid crystal light valve 25. Now, the light intensity distribution image of the joint Fourier transform image is displayed on the liquid crystal display 25.

The other beam reflected by the beam splitter 23 is further reflected by the mirrors 31, 32 and the deflection beam splitter 26 onto the reading surface of the light valve 25, thus converting into a coherent image the intensity distribution image of the joint Fourier transform image displayed on the liquid crystal light valve 25. This coherent image then passes through the polarisation beam splitter 26 - which is used in place of an analyser - and is read as a negative or positive image of the intensity distribution, which is then Fourier transformed by the Fourier transform lens 8. Now, the CCD camera 27 can receive the correlation peaks.

While the joint input image and the liquid crystal light valve 25 may be located at any position between the front focal plane and the back focal plane of the Fourier transform lenses 4, 8, it is preferable to install them either at the front focal planes or between the Fourier transform lenses 4, 8 and their back focal planes. In this embodiment, the joint input image on the plate 3 is located at the front focal plane of the Fourier transform lens 4 and the liquid crystal light valve 25 is positioned at its back focal plane. The liquid crystal light valve 25 is located at the front focal plane of the Fourier transform lens 8 and the CCD camera 27 is located at its back focal plane. The masking liquid crystal television 24 is arranged immediately before or after the input plate 3.

The correlation signal output from the CCD camera 27, since it is an analog signal, is converted by the A/D convertor 28 to a digital signal, which is then fed to the computer 29, where the light intensities of the correlation peaks are measured. The computer 29 generates an appropriate feed-back transfer function and calculates values from the feed-back transfer function and the measured light intensities of the correlation peaks. According to the calculated values, the computer 29 produces a signal for activating the masking liquid crystal television 24. The signal produced by the computer 29 is converted by the D/A convertor 30 into an analogue signal, which activates the masking liquid television 24.

The joint input image is shown in figure 3 and has one signal image at the centre thereof and a plurality of reference images arranged along a circle centred on the signal image. This configuration is used to make the distances from the signal image to the reference images constant. In this example, the reference images number 13. In the initial state, the masking liquid crystal television 24 is made completely transparent so that the reference images and the signal image are radiated with the uniform coherent beam.

Next, the operation of the apparatus shown in figure 2 will be explained. The process up to where the computer 29 calculates the correlation coefficients or normalised correlation peak intensities Cᵢ is the same as the one described above. In the initial state, the computer 29 calculates the average of the light intensities of the correlation peaks, which is used as a threshold value h in the equation 3. For simplicity, the form of the feed-back transfer function g, ie the non-linearity, is left as was first set and is not changed.

The normalised correlation peak light intensities or correlation coefficients Cᵢ are entered into the feed-back transfer function g thus set, and the outputs Mᵢ are used to change the transmittances at portions, corresponding to the reference images, on the masking liquid crystal television 24. Under this condition, the correlation processing is carried out again to determine the light intensities of the correlation peaks. From the next feed-back cycle onward, the same feed-back transfer function g that was set in the initial state is used as it is. That is, the threshold value is not changed.

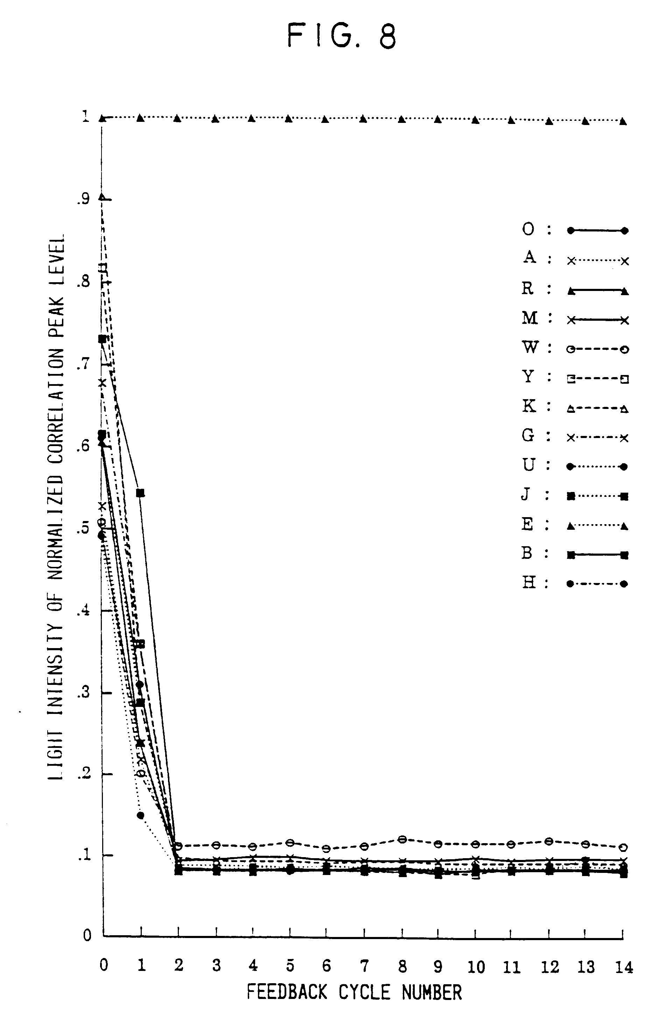

Figure 8 shows how the light intensity of the normalised correlation peaks changes as a result of reiteration when the Sigmoid function of equation (2) is as the feed-back transfer function g the parameters set in equation (2) are: α = 0.7 and x₀ = 0.1. The threshold value α was determined from the correlation peak light intensity distribution in the initial condition in ways described above. It can be seen from figure 8 that, except for a line E, the light intensities of the correlation peaks corresponding to the reference images rapidly decrease as the feed-back cycle is repeated indicating that the correct recognition is made.

With the above mentioned method of setting the threshold value, a quick and precise recognition was also obtained when other joint input images having different reference images where used.

In the above embodiment, when the correlation peak intensity distribution is measured by the computer 29, only the average of the distribution is taken as the threshold value h. Many other methods for determining the threshold value are also possible, such as using a standard deviation (average-standard deviation) as the threshold value h. There are also many alternatives for setting the non-linearity when the Sigmoid function of equation (2) is used as the feed-back transfer functions g. For example, the parameter x₀ representing the non-linearity may be set so as to be inversely proportional to the standard deviation of the light intensities of the correlation peaks.

Next, let us consider the dynamic range of the feed-back transfer function g. The change in the dynamic range corresponds to a change in contrast of the masking crystal television 24. For example, when the contrast of the masking liquid crystal television 24 is large and many reference images are masked by the masking liquid crystal television 24 as a result of feed-back, the amount of light striking the writing surface of the liquid crystal light valve 25 may become too small to display the light intensity distribution of the joint Fourier transform image properly, rendering correct recognition impossible. In such a case, it stands to reason that the light intensity by its components concentrating around the light axis of the correlation output image received by the CCD camera 27 becomes lower.

A possible method for solving this problem may be to measure the light intensity by the computer 29 and set the dynamic range so as to be proportional to the measured value. With this method, a reduced dynamic range is equivalent to a reduced contrast of the masking liquid crystal television 24. Thus, even when many reference images are masked, the amount of light that passes through the masking liquid crystal television 24 does not decrease dramatically, ensuring an appropriate light intensity distribution of the Fourier transform image is to be displayed. This in turn results in correct pattern recognition.

Generally, however, as the contrast of the masking liquid crystal television 24 is increased, the transmittance of light decreases, lowering the utilisation efficiency of the laser beam. For this reason, the contrast cannot be made too high. Therefore, since such a phenomenon as mentioned above rarely occurs, the dynamic range of the feed-back transfer function g can in many cases normally be set at a maximum and no change is necessary. Further, in the above embodiment, the light intensity distribution of correlation peaks is measured only in the initial state and the feed-back transfer function g is not changed in the succeeding feed-back cycles. It is, however, possible to measure the light intensity distribution of correlation peaks in each feed-back cycle and, based on that information, to change the threshold value h and non-linearity of the feed-back transfer function g by the computer 29.

In the above embodiment, the method of determining the feed-back transfer function g involves measuring the light intensity distribution of normalised correlation peaks in an initial condition by the computer 29 to set an appropriate form of function and a threshold value h. However, if the function form or threshold value h are not changed during the recognition process, the simplest method may be to pre-select an appropriate feed-back transfer function g through trial and error based on experience.

For example, an operator may choose an appropriate threshold value h or change the function form according to the number of reference images, to whether the reference image is a character or complex image, or to the extent to which the reference images are alike. Alternatively, information such as operator experience may be accumulated in the computer as a database to build an expert system.

Although the above embodiment employs the Sigmoid function as a feed-back transfer function, a unit step function or a multiple step function may also be used without deviating from the principle of operation of this invention.

The liquid crystal light valve 25 in the above embodiment may use a nematic liquid crystal material or a ferro-electric liquid crystal material as a light modulating material.

While, in the above embodiment, a Fourier transform spatial light modulator of a light writing and reflection type, such as the liquid crystal light valve 25, is used, it is also possible to employ a transmission type Fourier transform spatial light modulator, such as a spatial light modulator that employs a BSO crystal (Bi₁₂SiO₂₀) as the modulating material. Instead of using the light writing type of spatial light modulator, the Fourier transform image picked up by the CCD camera 27 may be displayed on an electrical writing type of spatial light modulator.

The above embodiment simultaneously performs the writing and reading of the light intensity distribution of the joint Fourier transform image to and from the liquid crystal light valve 25. Let us consider a case of the spatial light modulator having a memory characteristic, being for example a liquid crystal light valve using a ferro-electric liquid crystal material. In this case, a respective shutter is preferably provided at an arbitary position in each of the two light paths running from the beam splitter 23 to the writing and reading planes of the liquid crystal light valve 25. This eliminates the effect that the read beam has on the writing of the light intensity distribution of the joint Fourier transform image, and also the effect of the write beam on that image being read out. These shutters need only controlled by the computer 29 so that, during writing, only the shutter and the writing light path is opened and, during reading, only the shutter in the reading light path is opened.

In the described embodiment, the total amount of light that passes through the reference images is not normalised to make it constant. However, if there are large differences between the amounts of light that pass through each reference image, as when the size of each reference image differs, the light amounts passing through the reference images should be normalised to improve the recognition performance.

While, in the described embodiment, the light beam from the laser 1 is separated into two beams by the beam splitter 23, it is of course possible to use two lasers.

Although the image plate 3 of the above embodiment is located immediately behind the masking liquid crystal television 24, it may also be placed before the masking liquid crystal television 24, if the two are arranged close together.

While the input image in the above embodiment consists of one signal image and a plurality of reference images, as shown in figure 3, it may also consist of a plurality of signal images and one reference image or of a plurality of both the signal and reference images.

The laser 21 may be of any type, such as a gas laser or a semi-conductor laser, as long as it generates a good coherent beam.

While the described embodiment uses the masking liquid crystal television 24 to change the intensity of light applied to the reference images, only a spatial light modulator that can change the transmittance or reflectance in accordance with the output Mᵢ of the feed-back transfer function g is needed.

In the described embodiment, it is not necessary to use lenses with equal focal distances for the Fourier transform lens 4, 8.

## Claims

1. Optical pattern recognition apparatus comprising means for generating a coherent image of a joint input image (3), including at least one reference image (Rᵢ) and a plurality of signal images (S) or a plurality of reference images (Rᵢ) and at least one signal image (S), by applying a coherent light beam (1) to the joint input image, Fourier transform means (4) for transforming the coherent image into a joint Fourier transform image, means (5) for converting the joint Fourier transform image into a light intensity distribution, and means (8, 9) for determining a correlation coefficient between the reference and the signal images based on the light intensity distribution, means (2, 11) responsive to an output from the correlation coefficient determining means (8, 9) for controlling in accordance with a transfer function the intensity of light applied to each of said plurality of signal images (S) or said plurality of reference images (Rᵢ) to form a subsequent joint image, characterised by means (12) for determining or correcting the transfer function, which are arranged to alter the transfer function according to the number of reference images and/or the degree to which the images are alike.

2. Apparatus according to claim 1 characterised in that the light adjusting means comprise a spatial light modulator serving as a mask.

3. Apparatus according to claim 1 or 2 characterised in that the transfer function comprises one or a combination of a saturation function, a unit step function or a multiple step function.

## Patentansprüche

1. Optische Mustererkennungseinrichtung, umfassend Mittel zum Erzeugen eines kohärenten Bildes eines zusammengefügten Eingangsbildes (3), umfassend wenigstens ein Referenzbild (Rᵢ) und eine Mehrzahl von Signalbildern (S) oder eine Mehrzahl von Referenzbildern (Rᵢ) und wenigstens ein Signalbild (S), durch Richten eines kohärenten Lichtstrahls (1) auf das zusammengefügte Eingangsbild, Fouriertransformationsmittel (4) zum Transformieren des kohärenten Bildes in ein zusmmengefügtes Fouriertransformationsbild, Mittel (5) zum Umwandeln des zusammengefügten Fouriertransformationsbildes in eine Lichtintensitätsverteilung und Mittel (8, 9) zum Bestimmen eines Korrelationskoeffizienten zwischen den Referenz- und Signalbildern beruhend der Lichtintensitätsverteilung, Mittel (2,11), welche auf eine Ausgabe von den Korrrelationskoeffizientenbestimmungsmitteln (8, 9) ansprechen, zum Steuern der Lichtintensität, welche auf jedes der Mehrzahl von Signalbildern (S) oder der Mehrzahl von Referenzbildern (Rᵢ) gerichtet wird, gemäß einer Transferfunktion, um ein nachfolgendes zusammengefügtes Bild zu erzeugen, gekennzeichnet durch Mittel (12) zum Bestimmen oder korrigieren der Transferfunktion, welche Mittel zum Ändern der Transferfunktion gemäß der Anzahl an Referenzbildern und/oder dem Ausmaß, in welchem die Bilder sich gleichen, eingerichtet sind.

2. Einrichtung nach Anspruch 1, dadurch gekennzeichnet, daß die Lichteinstellmittel einen als Maske dienenden räumlichen Lichtmodulator umfassen.

3. Einrichtung nach Anspruch 1 oder 2, dadurch gekennzeichnet, daß die Transferfunktion eine Sättigungsfunktion oder eine Kombination davon, eine Einheitsstufen-Funktion oder eine Mehrfachstufen-Funktion umfaßt.

## Revendications

1. Dispositif optique de reconnaissance de formes comportant des moyens (3) destinés à produire une image cohérente d'une image d'entrée jointe, comportant au moins une image (Ri) de référence et une pluralité d'images (S) de signal, ou une pluralité d'images (Ri) de référence et au moins une image (S) de signal, qui appliquent un faisceau (1) de lumière cohérent à l'image d'entrée jointe, des moyens (4) de transformation de Fourier destinés à transformer l'image cohérente en une image de transformée de Fourier jointe, des moyens (5) destinés à convertir l'image de transformée de Fourier jointe en une distribution d'intensité de lumière, et des moyens (8,9) destinés à déterminer un coefficient de corrélation entre les images de référence et de signal sur la base de la distribution d'intensité de lumière, des moyens (2,11) sensibles à une sortie des moyens (8,9) de détermination de coefficient de corrélation en commandant conformément à une fonction de transfert l'intensité de lumière appliquée à chacune de la pluralité d'images (S) de signal ou de la pluralité d'images (Ri) de référence pour former une image jointe suivante, caractérisé par des moyens (12) destinés à déterminer ou corriger la fonction de transfert, qui sont disposés de façon à modifier la fonction de transfert conformément au nombre d'images de référence et/ou à la mesure selon laquelle les images sont identiques.

2. Dispositif suivant la revendication 1, caractérisé en ce que les moyens d'ajustement de lumière comportent un modulateur de lumière spatial servant de masque.

3. Dispositif suivant la revendication 1 ou 2, caractérisé en ce que la fonction de transfert comporte une fonction ou une combinaison de fonctions, parmi une fonction de saturation, une fonction à étage unité et une fonction à étages multiples.
